# EUROPÄISCHE PATENTSCHRIFT

(11) **EP 1 656 321 B1**
(45) Veröffentlichungstag und Bekanntmachung des Hinweises auf die Patenterteilung: **22.07.2009**
(21) Anmeldenummer: 04762649.4
(22) Anmeldetag: 12.08.2004
(51) Int. Cl.: C01B 3/00

(54) **METALLHALTIGER,WASSERSTOFFSPEICHERNDER WERKSTOFF UND VERFAHREN ZU SEINER HERSTELLUNG**
METAL-CONTAINING, HYDROGEN-STORING MATERIAL AND METHOD FOR PRODUCING THE SAME
MATERIAU CONTENANT DU METAL ET ACCUMULANT DE L'HYDROGENE ET PROCEDE DE PRODUCTION DE CE MATERIAU

(30) Priorität: 19.08.2003 DE 10337970
(43) Veröffentlichungstag der Anmeldung: 17.05.2006
(73) Patentinhaber: GKSS-Forschungszentrum Geesthacht GmbH, 21502 Geesthacht (DE)
(72) Erfinder: BARKHORDARIAN, Gagik, 21502 Geesthacht (DE); KLASSEN, Thomas, 21465 Wentorf (DE); BORMANN, Rüdiger, 21224 Rosengarten (DE)
(74) Vertreter: UEXKÜLL & STOLBERG
(86) Internationale Anmeldenummer: PCT/DE2004/001804
(87) Internationale Veröffentlichungsnummer: WO 2005/019097

(56) Entgegenhaltungen:
- EP-A- 0 936 686
- EP-A- 1 100 141
- DE-A- 19 913 714
- US-A1- 2003 013 605

## Beschreibung

Die Erfindung betrifft einen metallhaltigen, wasserstoffspeichernden Werkstoff, der zu seiner Hydrierung oder Dehydrierung ein Katalysationsmittel enthält, und ein Verfahren zur Herstellung eines metallhaltigen, wasserstoffspeichernden Werkstoffs.

Ein metallhaltiger Werkstoff sowie ein Verfahren dieser Art sind bekannt (DE-A-199 13 714 sowie WO 01/53195). In dem vorgen. Dokument ist die Speicherung von Wasserstoff mittels Metallhydriden beschrieben worden. Es ist bekannt, daß Wasserstoff an sich ein idealer Träger von Energie ist, da bei seiner Rückumwandlung in Energie ausschließlich Wasser entsteht. Wasserstoff selbst kann mit Hilfe elektrischer Energie aus Wasser hergestellt werden.

Durch diesen gewissermaßen idealen Energieträger Wasserstoff ist es möglich, mit elektrischer Energie an bestimmten Orten, wo sie produziert wird, einen Wasserstoffspeicher zu hydrieren, d.h. zu laden, diesen an andere Orte zu transportieren und dort, wo ein Energiebedarf besteht, zu dehydrieren, d.h. zu entladen, und die freiwerdende Energie für den gewünschten Zweck zu nutzen, wobei bei der Rückumwandlung wiederum Wasser entsteht. Ein Problem stellt sich bei der Verwendung von Wasserstoff als Energieträger aber immer noch, das zwar bisher schon einer für viele Zwecke brauchbaren Lösung zugeführt wurde, für bestimmte Zwecke aber der bisher beschrittene bzw. angebotene Lösungsweg noch nicht ausreichend ist.

Bei der Speicherung von Wasserstoff mittels Metallhydriden, wie es in dem obigen Dokument beschrieben ist, wird der Wasserstoff chemisch gebunden und ein entsprechendes Metallhydrid gebildet. Durch Energiezufuhr, d.h. durch die Erwärmung des Metalls, wird der Wasserstoff wieder freigegeben, so daß die Reaktion vollständig reversibel ist. Ein Nachteil der Speicherung von Wasserstoff mittels eines Metallhydrids ist die verhältnismäßig geringe Reaktionsgeschwindigkeit, die Speicherzeiten von mehreren Stunden zur Folge hatte. Bei dem oben beschriebenen gattungsgemäßen metallhaltigen, wasserstoffspeichernden Werkstoff war zur Beschleunigung der Hydrierung oder der Dehydrierung ein Katalysationsmittel in Form eines Metalloxides hinzugegeben worden, womit eine außerordentlich hohe Zunahme der Reaktionsgeschwindigkeit beim Laden und Entladen erreicht worden ist, was für viele Anwendungsfälle schon zu sehr brauchbaren Lösungen für den Normaleinsatz geführt hatte. Für bestimmte Einsatzfälle ist auch der gattungsgemäße metallhaltige, wasserstoffspeichernde Werkstoff, der ein Katalysationsmittel in Form eines Metalloxides enthält, immer noch nicht ausreichend im Hinblick auf eine angestrebte bzw. notwendige Reaktionsgeschwindigkeit beim Hydrieren und Dehydrieren, zumal Katalysationsmittel auf der Basis von Nitriden, Oxiden und Karbiden aufgrund ihrer zum Teil hohen Dichten eine gewichtsbezogene Speicherkapazität des wasserstoffspeichernden Werkstoffs reduzieren.

Es ist somit Aufgabe der vorliegenden Erfindung, einen metallhaltigen Werkstoff, wie ein Metall, eine Metallegierung, eine intermetallische Phase, Verbundwerkstoffe aus Metallen sowie entsprechende Hydride zu schaffen, mit denen die Reaktionsgeschwindigkeit beim Hydrieren und Dehydrieren gegenüber der entsprechenden Fähigkeit derartiger Metalle, Metallegierungen, intermetallische Phasen, Verbundwerkstoffen aus Metallen sowie entsprechender Hydride, auch wenn diese Katalysationsmittel in Form von Metallhydriden enthalten, nochmals deutlich zu verbessern, so daß diese auch als Energiespeicher nutzbar sind, bei denen es auf sehr schnelle Energieaufnahme bzw. Energieabgabe ankommt bzw. ein extrem schnelles Hydrieren und Dehydrieren möglich ist, wobei ein Verfahren zur Herstellung eines metallhaltigen, wasserstoffspeichernden Werkstoffs wie eines Metalls, einer Metallegierung, einer intermetallischen Phase sowie eines Verbundwerkstoffes aus diesen Materialien einfach und kostengünstig durchführbar sein soll, so daß derart hergestellte Werkstoffe in großtechnischem Maße als Wasserstoffspeicher kostengünstig eingesetzt werden können, bei denen die technisch sehr hohe Reaktionsgeschwindigkeit bei der Hydrierung und Dehydrierung gewährleistet ist.

Gelöst wird die Aufgabe durch den wasserstoffspeichernden Werkstoff gemäß Anspruch 1 und durch das Verfahren gemäß Anspruch 4. Vorteilhafte Ausführungen sind in den Patentansprüchen 2-3 und 5-12 definiert.

Dabei wurde sich der Umstand zu Nutze gemacht, daß im Vergleich zu reinen Metallen Metallkarbonate spröde sind, wodurch eine noch kleinere Partikelgröße als bisher erreicht wird und eine noch homogenere Verteilung im erfindungsgemäßen Werkstoff erreichbar ist, was zur Folge hat, daß die Reaktionskinetik gegenüber der Verwendung von metallischen Katalysationsmitteln wesentlich erhöht wird. Ein weiterer wesentlicher Vorteil ist der, daß Metallkarbonate regelmäßig sehr viel preisgünstiger bereitstellbar sind als Metalle bzw. Metallegierungen, so daß auch das erfindungsgemäß angestrebte Ziel einer preisgünstigen großtechnischen Bereitstellbarkeit der erfindungsgemäßen Speicherwerkstoffe erreicht wird.

Die Vorteile von Metallkarbonaten als Katalysationsmittel im Vergleich zu anderen Katalysationsmitteln sind auch eine schnellere Kinetik als mit allen anderen Katalysationsmitteln erreichbar, ein besseres Verhältnis von Aktivität zu Gewicht und, wie schon erwähnt, eine kostengünstigere Bereitstellbarkeit als Metalle.

Gem. einer vorteilhaften Ausgestaltung des metallhaltigen Werkstoffs besteht das Metallkarbonat aus Gemischen von Metallkarbonaten, d.h. es ist grundsätzlich möglich, für bestimmte Anwendungszwecke verschiedene Metallkarbonate im gleichen metallhaltigen, wasserstoffspeichernden Werkstoff als Katalysationsmittel einzusetzen, womit bei bestimmten quantitativ und qualitativ wählbaren Gemischen eine nochmalige Verbesserung der Reaktionskinetik erreicht wird.

Ebenso ist es für bestimmte Anwendungsfälle vorteilhaft, das Metallkarbonat aus Mischkarbonaten von Metallen bestehen zu lassen, was ebenfalls bei bestimmten qualitativen und quantitativen Mischverhältnissen und Mischbestandteilen zu einer Erhöhung der Reaktionskinetik beim Hydrieren und beim Dehydrieren des wasserstoffspeichernden Werkstoffs führt.

Es war voranstehend dargelegt worden, daß Metall im Sinne der erfindungsgemäßen Gattung des wasserstoffspeichernden Werkstoffs auch begrifflich Metallegierungen, intermetallische Phasen, Verbundwerkstoffe aus Metallen sowie entsprechende Hydride umfassen soll.

Vorzugsweise ist der metallhaltige Werkstoff aber für bestimmte Anwendungsfälle derart gewählt, daß das Metallkarbonat ein Karbonat eines elementaren Metalls ist.

Es ist aber auch vorteilhafterweise möglich, das Metallkarbonat derart zu wählen, daß es das Karbonat der Metalle oder Metallgemische der Seltenen Erden ist.

Gem. einer weiteren vorteilhaften anderen Ausgestaltung der Erfindung wird das Metallkarbonat durch unterschiedliche Metallkarbonate des gleichen Metalls gebildet, wodurch auch speziellen Anwendungsbereichen des wasserstoffspeichernden Werkstoffs Rechnung getragen werden kann, um bestimmten Anforderungen an die zu erreichen gewünschte Reaktionskinetik zu genügen.

Schließlich ist es erfindungsgemäß erforderlich, dem metallhaltigen Werkstoff und dem Katalysationsmittel eine nanokristalline Struktur zu geben, womit die Reaktionsgeschwindigkeit der Hydrierung bzw. der Dehydrierung des metallhaltigen wasserstoffspeichernden Werkstoffs nochmals erhöht werden kann.

Das Verfahren zur Herstellung eines metallhaltigen wasserstoffspeichernden Werkstoffs zur Lösung der o.g. Aufgabe, die gleichermaßen auch für das Herstellungsverfahren gilt, zeichnet sich dadurch aus, daß der metallhaltige Werkstoff und/oder das Katalysationsmittel einem mechanischen Mahlvorgang unterworfen wird, bzw. werden.

Dadurch wird vorteilhafterweise ein Pulver aus dem metallhaltigen Werkstoff und/oder dem Katalysationsmittel erhalten, so daß sich eine optimierte Reaktionsoberfläche und eine sehr vorteilhafte Defektstruktur im Gesamtvolumen des wasserstoffspeichernden Werkstoffs ergibt und darin eine gleichmäßige Verteilung des Katalysationsmittels möglich wird.

Eine vorteilhafte Ausgestaltung des Verfahrens ergibt sich dadurch, daß der Mahlvorgang in Abhängigkeit vom metallhaltigen Werkstoff und/oder dem Katalysationsmittel zeitlich unterschiedlich lang durchgeführt wird, so daß, je nach zeitlicher Länge, die angestrebte optimale Oberfläche des wasserstoffspeichernden Werkstoffs und die angestrebte optimale Verteilung des Katalysationsmittel in diesem erreicht werden kann. Das Mahlen des Katalysationsmittels und das Mahlen des metallhaltigen Werkstoffs kann unterschiedlich lang gewählt werden und wird derart gewählt, daß der Pulverisierungsgrad des metallhaltigen Werkstoffs optimal an den gewünschten Pulverisierungsgrad des Katalysationsmittels angepaßt werden.

Es ist auch gem. einer weiteren vorteilhaften Ausgestaltung des Verfahrens möglich, daß der metallhaltige Werkstoff zunächst dem Mahlvorgang unterworfen wird und nachfolgend nach Zugabe des Katalysationsmittels dazu der Mahlvorgang bezüglich des metallhaltigen Werkstoffs und des Katalysationsmittels fortgesetzt wird, es ist aber auch vorteilhafterweise möglich, daß zunächst das Katalysationsmittel dem Mahlvorgang unterworfen wird und nachfolgend nach Zugabe des metallhaltigen Werkstoffs dazu der Mahlvorgang bezüglich des Katalysationsmittels und des metallhaltigen Werkstoffs fortgesetzt wird.

Die vorangehend beschriebenen unterschiedlichen Modifikationen der Verfahrensführung werden jeweils gewählt in Abhängigkeit des Grades der Pulverisierung des Katalysationsmittels und des Pulverisierungsgrades metallhaltigen Werkstoffs, die entscheidend für eine optimal mögliche Reaktionskinetik in Abhängigkeit des gewählten Metalls i.V.m. dem geeignet dazu gewählten Katalysationsmittel ist.

Es sei aber darauf hingewiesen, daß es prinzipiell möglich ist und im Rahmen der Erfindung liegt, daß vorteilhafterweise der metallhaltige Werkstoff und das Katalysationsmittel (von Anfang an) bis zum Erreichen des vorbestimmten Pulverisierungsgrades gemeinsam gemahlen werden.

Die Dauer des Mahlvorganges, die auch wiederum in Abhängigkeit des wasserstoffspeichernden Metalls und in Abhängigkeit des gewählten Katalysationsmittels gewählt werden kann, liegt, wie Versuche ergeben haben, im unteren Bereich schon im Bereich von wenigen Minuten, um für eine bestimmte Auswahl des wasserstoffspeichernden Werkstoffs und des Katalysationsmittels eine optimale Reaktionskinetik zu erreichen. Vorzugsweise ist die Dauer des Mahlvorganges somit im Bereich von wenigstens 1 Min. bis zu einer Dauer von 200 Std. liegend.

So ist bspw. eine besonders gute Reaktionskinetik schon bei 20 Std. des Mahlens eines Katalysationsmittels in Form von MnCO₃ möglich.

Um zu verhindern, daß während des Mahlvorganges des metallhaltigen wasserstoffspeichernden Werkstoffs und/oder des Katalysationsmittels diese mit dem Umgebungsgas reagieren, in dem der Mahlvorgang vonstatten geht, wird der Mahlvorgang vorteilhafterweise unter einer Inertgasatmosphäre durchgeführt, wobei das Inertgas vorzugsweise Argon ist, aber auch prinzipiell Stickstoff sein kann. Es sei aber darauf hingewiesen, daß das Verfahren grundsätzlich auch unter einer Atmosphäre aus Umgebungsluft durchgeführt werden kann in Abhängigkeit der ausgewählten Art des dem metallhaltigen Werkstoffs zugrunde liegenden Metalls (im Sinne der obigen Definition) und in Abhängigkeit des gewählten Katalysationsmittels. Metallkarbonate können auch durch Mahlen mit organischen Lösungsmitteln in situ hergestellt werden.

Die Erfindung wird nun unter Bezugnahme auf die beiden Figuren zusammenfassend im einzelnen dargestellt. Darin zeigen:
- Fig. 1: einen Vergleich der Wasserstoffabsorptionskinetik von Magnesium mit 1 mol% MnCo₃ mit einer Mahlzeit von 20 Std. und 1 mol% Cr₂O₃ mit einer Mahlzeit von 100 Std. bei einer Temperatur von 300° C und einem Wasserstoffdruck von 8,4 bar und
- Fig. 2: einen Vergleich der Wasserstoffdesorptionskinetik von Magnesium mit 1 mol% MnCO₃ und einer Mahlzeit von 20 Std. und 1 mol% Cr₂O₃ mit einer Mahlzeit von 100 Std. bei einer Temperatur von 300° C im Vakuum.

Der metallhaltige, wasserstoffspeichernde Werkstoff wird als Wasserstoffspeicher, der geladen und entladen werden kann, genutzt. Der chemisch-physikalische Vorgang der Speicherung von Wasserstoff ist die Hydrierung des Werkstoffs und bei der Entladung die Dehydrierung. Zur Beschleunigung der Hydrierung und der Dehydrierung wird als Katalysationsmittel ein Metallkarbonat eingesetzt. Der metallhaltige wasserstoffspeichernde Werkstoff wird in pulverförmiger Form benötigt, um eine extrem große Reaktionsoberfläche zur Verfügung zu haben. Gleiches gilt prinzipiell auch für das Katalysationsmittel in Form des Metallkarbonats. Der Gehalt an Katalysationsmittel kann beispielsweise 0,005 mol% bis 20 mol% betragen.

Um den eigentlichen metallhaltigen, wasserstoffspeichernden Werkstoff und/oder das Katalysationsmittel in pulverförmiger Form vorliegen zu haben, wird bzw. werden das Katalysationsmittel und/oder der metallhaltige Werkstoff einem mechanischen Mahlvorgang unterworfen.

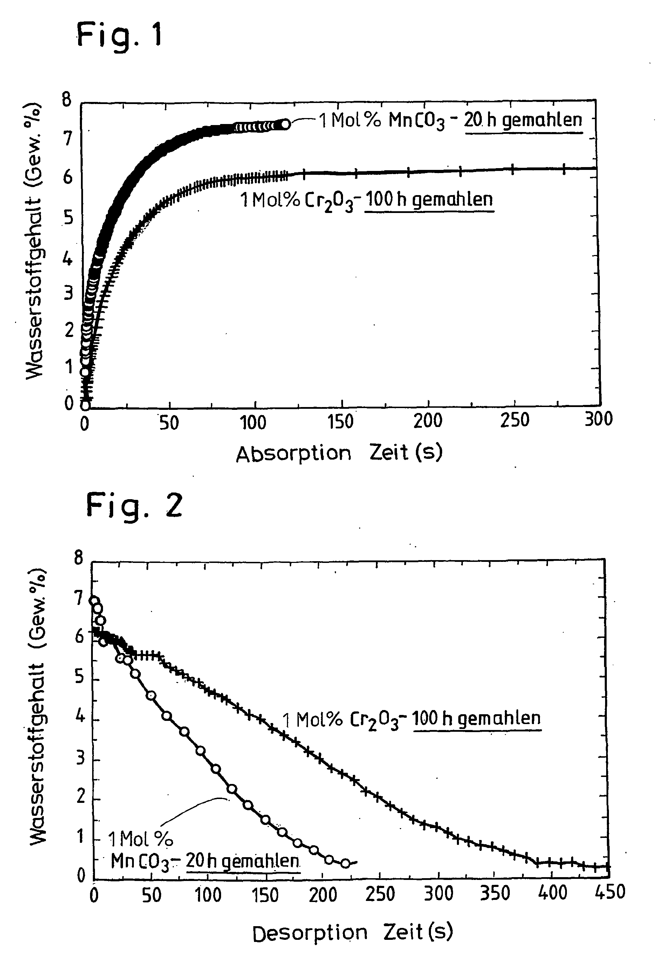

Unter Bezugnahme auf die Fig. 1 ist ersichtlich, daß mit Hilfe des erfindungsgemäßen Katalysationsmittels in Form eines Metallkarbonats, im vorliegenden Falle der Zusammensetzung MnCO₃ eine sehr viel schnellere Wasserstoffabsorptionskinetik erreicht wird als mit den besten bisher benutzten oxydischen Katalysatoren, wie sie bspw. in der auf die gleiche Anmelderin zurückgehenden DE-A-199 13 714 beschrieben sind. Dort werden die besagten metalloxidischen Katalysationsmittel eingesetzt. Darüber hinaus wird aufgrund der geringeren Dichte der erfindungsgemäßen Katalysationsmittel auf der Basis von Metallkarbonaten eine um mehr als 20 % höhere reversible Speicherkapazität erreicht. Zudem ist es mit dem erfindungsgemäßen Katalysationsmittel auf der Basis von Metallkarbonaten möglich, die Hydrierung des metallhaltigen, wasserstoffspeichernden Werkstoffs bei Temperaturen durchzuführen, die erheblich geringer sind als im Vergleich zu katalysierten Reaktionen auf der Basis von Katalysationsmitteln metalloxidischer Art und noch stärker reduziert sind im Vergleich zu nichtkatalysierten Reaktionen überhaupt.

## Patentansprüche

1. Wasserstoffspeichernder Werkstoff, enthaltend ein Metall zur Aufnahme und Abgabe von Wasserstoff, das eine nanokristalline Struktur aufweist, und ein Metallkarbonat, dass auch eine nanokristalline Struktur aufweist.

2. Wasserstoffspeichernder Werkstoff nach Anspruch 1, **dadurch gekennzeichnet, dass** das Metallkarbonat ein Mischkarbonat ist.

3. Wasserstoffspeichernder Werkstoff nach Anspruch 1, wobei der Gehalt an Metallkarbonat 0,005 Mol.-% bis 20 Mol.-% beträgt.

4. Verfahren zur Herstellung eines wasserstoffspeicherndern Werkstoffs gemäß einem der Ansprüche 1 bis 3, **dadurch gekennzeichnet, dass** das Metall und/oder das Metallkarbonat mechanisch gemahlen werden.

5. Verfahren nach Anspruch 4, **dadurch gekennzeichnet, dass** das Metall zunächst gemahlen wird und anschließend nach Zugabe des Metallkarbonats der Mahlvorgang fortgesetzt wird.

6. Verfahren nach Anspruch 5, **dadurch gekennzeichnet, dass** zunächst das Metallkarbonat gemahlen wird und anschließend nach Zugabe des wasserstoffspeichernden Metalls der Mahlvorgang fortgesetzt wird.

7. Verfahren nach einem der Ansprüche 4 bis 6, **dadurch gekennzeichnet, dass** die Dauer des Mahlvorgangs im Bereich von einer Minute bis 200 Stunden liegt.

8. Verfahren nach Anspruch 7, **dadurch gekennzeichnet, dass** die Dauer des Mahlvorgangs im Bereich von 20 Stunden bis 100 Stunden liegt.

9. Verfahren nach einem der Ansprüche 4 bis 8, **dadurch gekennzeichnet, dass** der Mahlvorgang unter einer Inertgasatmosphäre durchgeführt wird.

10. Verfahren nach Anspruch 9, **dadurch gekennzeichnet, dass** das Inertgas Argon ist.

11. Verfahren nach einem der Ansprüche 4 bis 10, **dadurch gekennzeichnet, dass** der Mahlvorgang unter Zugabe eines organischen Lösungsmittels erfolgt.

12. Verfahren nach einem der Ansprüche 4 bis 8 oder 11, **dadurch gekennzeichnet, dass** der Mahlvorgang unter einer Kohlenmonoxid- und/oder Kohlendioxid-haltigen Atmosphäre durchgeführt wird.

## Claims

1. Hydrogen-storage material, comprising a metal for the absorption and desorption of hydrogen, said metal exhibiting a nanocrystalline structure, and a metal carbonate, which also exhibits a nanocrystalline structure.

2. Hydrogen-storage material according to claim 1, **characterised in that** the carbonate consists of mixtures of carbonates.

3. Hydrogen-storage material according to claim 1, wherein the metal carbonate content is from 0.005 mole % to 20 mole %.

4. Process for the production of a hydrogen-storage material according to any of claims 1 to 3, **characterised in that** the metal and/or the metal carbonate are subjected to a mechanical milling process.

5. Process according to claim 4, **characterised in that** the metal is first subjected to the milling process and subsequently, following the addition of the metal carbonate to it, the milling process is continued.

6. Process according to claim 5, **characterised in that** the metal carbonate is first subjected to the milling process and subsequently, following the addition of the hydrogen-storing metal to it, the milling process is continued.

7. Process according to any of claims 4 to 6, **characterised in that** the duration of the milling process is in the range of from one minute to 200 hours.

8. Process according to claim 7, **characterised in that** the duration of the milling process is in the range of from 20 hours to 100 hours.

9. Process according to any of claims 4 to 8, **characterised in that** the milling process is carried out under an inert gas atmosphere.

10. Process according to claim 9, **characterised in that** the inert gas is argon.

11. Process according to any of claims 4 to 10, **characterised in that** the milling process is carried out with an addition of an organic solvent.

12. Process according to anyone of claims 4 to 8 or 11, **characterised in that** the milling process is carried out under a carbon monoxide and/or carbon dioxide-containing atmosphere.

## Revendications

1. Matériau accumulant de l'hydrogène, comprenant un métal pour l'absorption et l'émission d'hydrogène qui présente une structure nanocristalline, et un carbonate de métal qui présente aussi une structure nanocristalline.

2. Matériau accumulant de l'hydrogène selon la revendication 1, **caractérisé en ce que** le carbonate de métal est un carbonate mélangé.

3. Matériau accumulant de l'hydrogène selon la revendication 1, la teneur en carbonate de métal allant de 0,005 % en moles à 20 % en moles.

4. Procédé de production d'un matériau accumulant de l'hydrogène selon l'une quelconque des revendications 1 à 3, **caractérisé en ce que** le métal et/ou le carbonate de métal sont moulus mécaniquement.

5. Procédé selon la revendication 4, **caractérisé en ce que** le métal est d'abord moulu et qu'ensuite, après ajout du carbonate de métal, le processus de broyage est poursuivi.

6. Procédé selon la revendication 5, **caractérisé en ce que** le carbonate de métal est d'abord moulu et qu'ensuite, après ajout du métal accumulant de l'hydrogène, le processus de broyage est poursuivi.

7. Procédé selon l'une quelconque des revendications 4 à 6, **caractérisé en ce que** la durée du processus de broyage est située dans la plage de une minute à 200 heures.

8. Procédé selon la revendication 7, **caractérisé en ce que** la durée du processus de broyage est située dans la plage de 20 heures à 100 heures.

9. Procédé selon l'une quelconque des revendications 4 à 8, **caractérisé en ce que** le processus de broyage est réalisé sous atmosphère de gaz inerte.

10. Procédé selon la revendication 9, **caractérisé en ce que** le gaz inerte est de l'argon.

11. Procédé selon l'une quelconque des revendications 4 à 10, **caractérisé en ce que** le processus de broyage se produit avec l'ajout d'un solvant organique.

12. Procédé selon l'une quelconque des revendications 4 à 8 ou 11, **caractérisé en ce que** le processus de broyage est réalisé en atmosphère contenant du monoxyde de carbone et/ou du dioxyde de carbone.
